# EUROPEAN PATENT APPLICATION

(11) **EP 1 501 213 A1**
(43) Date of publication of application: **26.01.2005**
(21) Application number: 02720639.0
(22) Date of filing: 30.04.2002
(51) Int. Cl.: H04B 7/26

(54) **MOBILE STATION**

(71) Applicant: MITSUBISHI DENKI KABUSHIKI KAISHA, Tokyo 100-8310 (JP)
(72) Inventor: AIKAWA, Hideto, MITSUBISHI DENKI K. K., Tokyo 100-8310 (JP); SHIBUYA, Akihiro, MITSUBISHI DENKI K. K., Tokyo 100-8310 (JP)
(74) Representative: Pfenning, Meinig & Partner GbR
(86) International application number: PCT/JP2002/004338
(87) International publication number: WO 2003/094390

(57) **Abstract**

Amobile station receives data from a plurality of sectors and selects sectors as candidates for site selection diversity transmit power control from the plurality of sectors. When the mobile station does not receive any data via dedicated physical data channels from selected sectors, the mobile station selects two or more sectors from sectors listed in a received sector selection candidate table.

## Description

### Field of the Invention

The present invention relates to a mobile station for use with moving obj ect wireless communications. More particularly, it relates to a mobile station to which site selection diversity transmit power control is applied.

### Background of the Invention

For example, in a moving object wireless communication system using a CDMA (Code Division Multiple Access) method, one mobile station can receive identical data simultaneously from two or more sectors and select a specific sector from the two or more sectors with which the mobile station is communicating. Then, only the selected sector can carry out SSDT (Site Selection Diversity Transmit power control) so as to transmit data to the mobile station by using a DPDCH (Dedicated Physical Data Channel). Here, sectors are referred to as base stations each of which is provided with a directional antenna and can cover a part of an area of 360 degrees.

As a prior art sector selection method of carrying out site selection diversity transmit power control or SSDT, there has been provided a sector selection method disclosed by 3GPP TS 25.214 ver3.7.0 (3 rd Generation Partnership Project, Technical Specification Group Radio Access Network, 2001-6).

In accordance with this prior art sector selection method, one mobile station in a diversity handover state receives a sector selection candidate table (i.e., a sector ID list) indicating sectors with which the mobile station is communicating, via a sector, from a radio network control station RNC (Radio Network Controller) who is a higher-level office located at a higher level than sectors. The mobile station then measures the received level of the common pilot channel of each sector which is listed in the received sector selection candidate table, selects a sector having the highest received level of the common pilot channel from all sectors listed in the received sector selection candidate table, and notifies the sector ID of the selected sector to all the sectors by using uplink dedicated physical channels.

The sector with the highest received level is called primary cell. When the mobile station notifies a primary cell ID to all the sectors with which the mobile station is communicating, sectors which do not receive the notification indicating that they are primary cells can recognize themselves as being non-primary cells and stops transmission of data to the mobile station via their dedicated physical data channels. Thus, only the sector specified as the primary cell can carry out site selection diversity transmit power control so as to transmit data to the mobile station by using its dedicated physical data channel.

The mobile station can thus reduce the interference power in the area covered by each sector by notifying the primary cell ID to all the sectors so as to dynamically change the primary cell and by receiving data, via the dedicated physical data channel of the primary cell, only from the primary cell.

In accordance with this prior art sector selection method, when the mobile station is provided with a function of dealing with the site selection diversity transmit power control, the radio network control station RNC determines whether the site selection diversity transmit power control is turned on or off and notifies a determination result to the mobile station. The mobile station to which the "on" state of the site selection diversity transmit power control is notified then measures the received level of the common pilot channel, selects the sector with the highest received level as the primary cell, and notifies the primary cell ID to all the sectors with which the mobile station is communicating. However, since there is no guarantee that the sector selected as the primary cell can receive data via the uplink dedicated physical channel from the mobile station with a good quality, even if the mobile station sends a notification indicating that the sector concerned is the primary cell to the sector several times, the sector concerned may not recognize that the sector itself is the primary cell.

The mobile station always continues selecting, as the primary cell, a base station whose received power of the common pilot channel is the strongest from all the sectors listed in the received sector selection candidate table without determining whether or not the mobile station is receiving data using the dedicated physical data channel from the sector selected as the primary cell. Therefore, when the base station whose received power of the common pilot channel is the strongest dose not transmit any data to the mobile station by using the dedicated physical data channel thereof, the mobile station cannot receive any data via the dedicated physical data channel from the base station.

A problem with the prior art mobile station constructed as mentioned above is that in the radio network control station RNC who is a higher-level office placed at a higher level than sectors, data to be transmitted remain to be transmitted and the amount of the data exceeds the capacity of a buffer disposed therein.

Another problem is that although the site selection diversity transmit power control aims at reducing the interference power of data which the mobile station receives, the mobile station may be unable to receive data via the dedicated physical data channel from the sector selected as the primary cell, and, in such a case, must wait for transmission of data from the sector until the channel reception status is restored to its original one and therefore the probability of reception of data of the mobile station decreases.

The present invention is made in order to solve the above-mentioned problems, and it is therefore an object of the present invention to provide a mobile station that can reduce the amount of data to be transmitted which remain to be transmitted from a network to the mobile station, and can also improve the probability of reception of data via dedicated physical data channels of the mobile station.

### Disclosure of the Invention

In accordance with an aspect of the present invention, there is provided a mobile station that receives data from a plurality of sectors and selects sectors as candidates for site selection diversity transmit power control from the plurality of sectors, the mobile station selecting two or more sectors from sectors listed in a received sector selection candidate table which is received, via the plurality of sectors, from a radio network control station

Therefore, the present invention provides an advantage of being able to reduce the amount of data to be transmitted which remain to be transmitted from a network to the mobile station, and to improve the probability of reception of data via dedicated physical data channels of the mobile station. When the mobile station according to the present invention does not receive any data via dedicated physical data channels from selected sectors, the mobile station selects two or more sectors.

Therefore, the present invention provides an advantage of being able to reduce the amount of data to be transmitted which remain to be transmitted from the network to the mobile station, and to improve the probability of reception of data via dedicated physical data channels of the mobile station.

When the mobile station according to the present invention has not received any data via dedicated physical data channels from selected sectors a predetermined number or more of times, the mobile station selects two or more sectors.

Therefore, the present invention provides an advantage of being able to reduce the amount of data to be transmitted which remain to be transmitted from the network to the mobile station, and to improve the probability of reception of data via dedicated physical data channels of the mobile station.

The mobile station according to the present invention determines whether or not the mobile station is receiving data via a common pilot channel from each of the plurality of sectors, and, when the mobile station has not received any data via common pilot channels from each of the plurality of sectors a predetermined number or more of times, the mobile station selects two or more sectors.

Therefore, the present invention provides an advantage of being able to reduce the amount of data to be transmitted which remain to be transmitted from the network to the mobile station, and to improve the probability of reception of data via dedicated physical data channels of the mobile station. The present embodiment offers another advantage of being able to reduce the number of times that data is re-transmitted to the mobile station via the dedicated physical data channel from each sector even in an environment where site selection diversity transmit power control does not run effectively, thereby preventing disconnection of the dedicated physical data channel from each sector.

The mobile station according to the present invention excludes sectors from which the mobile station does not receive any data via common pilot channels from candidates for site selection diversity transmit power control.

Therefore, the present invention provides an advantage of being able to reduce the amount of data to be transmitted which remain to be transmitted from the network to the mobile station.

The mobile station according to the present invention excludes sectors from which the mobile station has not received any data via common pilot channels the predetermined number or more of times from candidates for site selection diversity transmit power control.

Therefore, the present invention provides an advantage of being able to reduce the amount of data to be transmitted which remain to be transmitted from the network to the mobile station.

In accordance with another aspect of the present invention, there is provided a mobile station that receives data from a plurality of sectors and selects sectors as candidates for site selection diversity transmit power control, the mobile station determining whether or not the mobile station is receiving data from each of the plurality of sectors, and excluding sectors from which the mobile station has not received any data via common pilot channels a predetermined number or more of times from candidates for site selection diversity transmit power control.

Therefore, the present invention provides an advantage of being able to reduce the amount of data to be transmitted which remain to be transmitted from the network to the mobile station.

The mobile station according to the present invention determines whether or not the mobile station is receiving data via a common pilot channel from each of the plurality of sectors.

Therefore, the present invention provides an advantage of being able to reduce the amount of data to be transmitted which remain to be transmitted from the network to the mobile station.

The mobile station according to the present invention determines whether or not the mobile station is receiving data via a dedicated physical data channel from each of selected sectors, and excludes sectors from which the mobile station has not received any data via dedicated physical data channels a predetermined number or more of times from candidates for site selection diversity transmit power control.

Therefore, the present invention provides an advantage of being able to reduce the amount of data to be transmitted which remain to be transmitted from the network to the mobile station.

In accordance with a further aspect of the present invention, there is provided a mobile station that receives data from a plurality of sectors and selects sectors as candidates for site selection diversity transmit power control, the mobile station selecting sectors based on received site selection diversity transmission power control on/off information, information indicating whether or not the mobile station is receiving data via a dedicated physical data channel from each of the plurality of sectors, and DTX on/off information of a TFCI field indicating the structure of a transport channel in the dedicated physical control channel.

Therefore, the present invention offers an advantage of being able to select effective sectors as candidates for site selection diversity transmit power control or SSDT with a high degree of accuracy, thereby reducing the amount of data to be transmitted which remain to be transmitted from the network to the mobile station and improving the probability of data reception of the mobile station.

The mobile station according to the present invention measures the received power of the dedicated physical data channel from each of the plurality of sectors so as to determine whether or not the mobile station is receiving data via the dedicated physical data channel.

Therefore, the present invention provides an advantage of being able to reduce the amount of data to be transmitted which remain to be transmitted from the network to the mobile station, and to improve the probability of data reception of the mobile station.

The mobile station according to the present invention measures the received power of the TFCI field of the dedicated physical data channel from each of the plurality of sectors so as to determine whether or not the mobile station is receiving data via the dedicated physical data channel.

Therefore, the present invention provides an advantage of being able to reduce the amount of data to be transmitted which remain to be transmitted from the network to the mobile station, and to improve the probability of data reception of the mobile station.

The mobile station according to the present invention measures the received power of a pilot field of the dedicated physical data channel from each of the plurality of sectors so as to determine whether or not the mobile station is receiving data via the dedicated physical data channel.

Therefore, the present invention provides an advantage of being able to reduce the amount of data to be transmitted which remain to be transmitted from the network to the mobile station, and to improve the probability of data reception of the mobile station.

The mobile station in accordance with the present invention measures both the received power of the TFCI field of the dedicated physical data channel from each of the plurality of sectors and the received power of a pilot field of the dedicated physical data channel so as to determine whether or not the mobile station is receiving data via the dedicated physical data channel.

Therefore, the present invention provides an advantage of being able to reduce the amount of data to be transmitted which remain to be transmitted from the network to the mobile station, and to improve the probability of data reception of the mobile station.

### Brief Description of the Figures

Fig. 1 is a block diagram showing the structure of a mobile station according to any one of embodiments 1 to 6 of the present invention;
Fig. 2 is a flow chart showing a flow of processing carried out by the mobile station according to embodiment 1 of the present invention;
Fig. 3 is a flow chart showing a flow of processing carried out by the mobile station according to embodiment 2 of the present invention;
Fig. 4 is a flow chart showing a flow of processing carried out by the mobile station according to embodiment 3 of the present invention;
Fig. 5 is a flow chart showing a flow of processing carried out by the mobile station according to embodiment 4 of the present invention;
Fig. 6 is a flow chart showing a flow of processing carried out by the mobile station according to embodiment 5 of the present invention;
Fig. 7 is a flow chart showing a flow of processing carried out by the mobile station according to embodiment 6 of the present invention;
Fig. 8 is showing the structure of a mobile station according to any one of embodiments 7 to 10 of the present invention;
Fig. 9 is a flow chart showing a flow of processing carried out by the mobile station according to embodiment 7 of the present invention;
Fig. 10 is a diagram for explaining a selection method of selecting a sector which a candidate selecting unit of the mobile station according to any one of embodiments 7 to 10 of the present invention uses;
Fig. 11 is a flow chart showing a flow of processing carried out by the mobile station according to embodiment 8 of the present invention;
Fig. 12 is a flow chart showing a flow of processing carried out by the mobile station according to embodiment 9 of the present invention; and
Fig. 13 is a flow chart showing a flow of processing carried out by the mobile station according to embodiment 10 of the present invention.

### Preferred Embodiments of the Invention

Hereafter, in order to explain this invention in greater detail, the preferred embodiments of the present invention will be described with reference to the accompanying drawings.

### Embodiment 1.

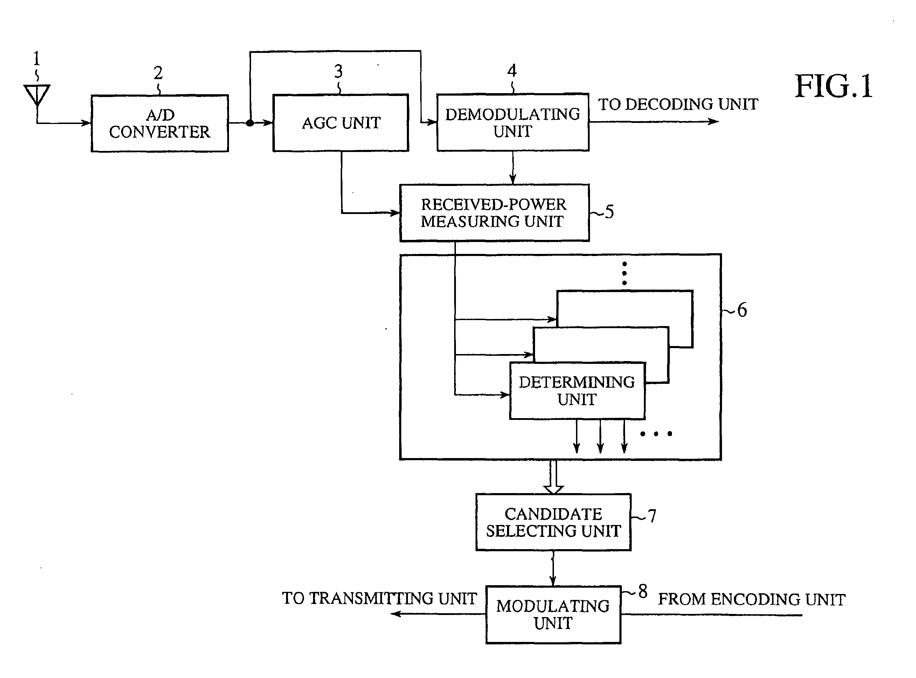

Fig. 1 is a block diagram showing the structure of a mobile station in accordance with embodiment 1 of the present invention. In the figure, reference numeral 1 denotes an antenna unit for receiving data, reference numeral 2 denotes an A/D converter for converting the received data of an analog signal into received data of a digital signal, reference numeral 3 denotes an AGC unit for performing gain adjustment on the received data of the digital signal into which the received data of the analog signal has been converted, and reference numeral 4 denotes a demodulating unit for demodulating the received data of the digital signal from the A/D converter 2 as for two or more paths and two or more sectors using a RAKE receiver, and for outputting demodulated data to a decoding unit (not shown).

In addition, in Fig. 1, reference numeral 5 denotes a received-power measuring unit for measuring the received power of a dedicated physical data channel from each sector based on the amplitude of data which are transmitted to the mobile station via the dedicated physical data channel from each sector and are demodulated by the demodulating unit 4 and setting data of the AGC unit 3, and for measuring the received power of a common pilot channel from each sector based on the amplitude of data which are transmitted to the mobile station via the common pilot channel from each sector and the setting data of the AGC unit 3, reference numeral 6 denotes a determining unit for determining whether or not the mobile station is receiving data via the dedicated physical data channel from each sector based on the received-power information measured by the received-power measuring unit 5, reference numeral 7 denotes a candidate selecting unit for selecting, as candidates, sectors each of which performs site selection diversity transmit power control based on determination results from the determining unit 6, and reference numeral 8 denotes a modulating unit for modulating data to be transmitted, the modulating unit having a transmission information mapping unit (not shown) for mapping the sector ID of a sector selected by the candidate selecting unit 7 into slots as transmit information.

Next, the operation of the mobile station in accordance with embodiment 1 of the present invention will be explained.

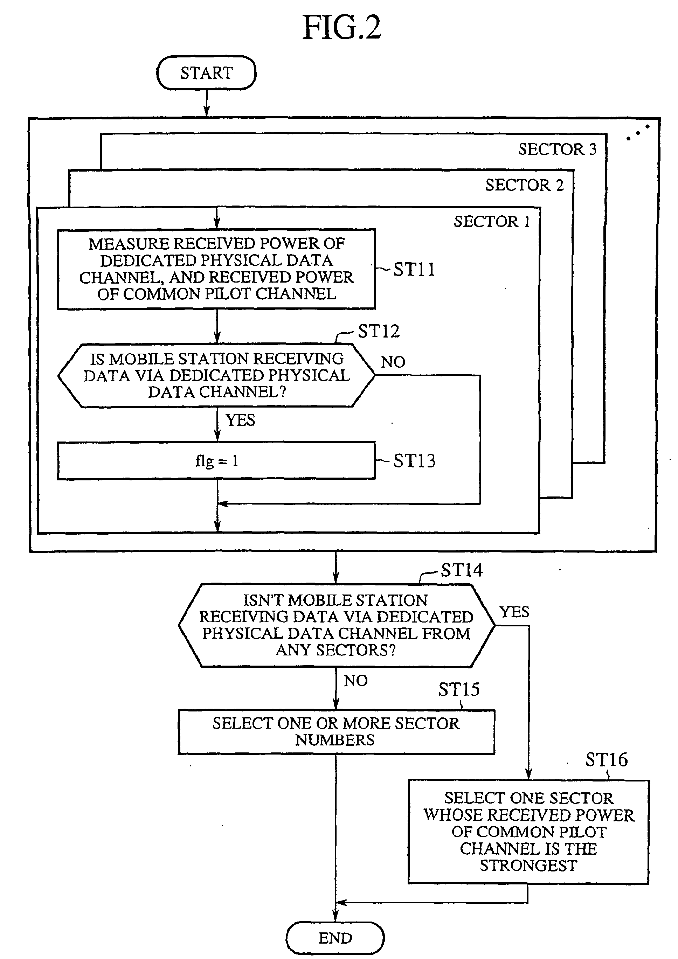

Fig. 2 is a flow chart showing a flow of processing carried out by the mobile station according to embodiment 1 of the present invention. In step ST11, the mobile station receives data via a dedicated physical data channel and also receives data via a common pilot channel from each of some sectors or all sectors listed in a sector selection candidate table notified thereto by a radio network control station RNC, and the received-power measuring unit 5 measures the received power of the dedicated physical data channel from each sector based on the amplitude of the data transmitted via the dedicated physical data channel from each sector and demodulated by the demodulating unit 4 and the setting data of the AGC unit 3 and measures the received power of the common pilot channel from each sector based on the amplitude of the data transmitted via the common pilot channel from each sector and demodulated by the demodulating unit 4 and the setting data of the AGC unit 3.

In step ST12, the determining unit 6 compares the received power of the dedicated physical data channel from one sector measured by the received-power measuring unit 5 with a predetermined threshold, and, when the received power is equal to or larger than the predetermined threshold, determines that the mobile station is receiving data via the dedicated physical data channel from the sector, whereas when the received power is smaller than the predetermined threshold, the determining unit 6 determines that the mobile station is not receiving any data via the dedicated physical data channel from the sector. The determining unit 6 thus determines whether or not the mobile station is receiving data via the dedicated physical data channel from each sector.

In step ST13, when determining that the mobile station is receiving data via the dedicated physical data channel from one sector, the determining unit 6 sets a corresponding flag. On the other hand, when determining that the mobile station is not receiving any data via the dedicated physical data channel from the sector, the determining unit 6 does not set the corresponding flag.

The above-mentioned processes of steps ST11 to ST13 are performed for each of some sectors or all sectors listed in the sector selection candidate table. In step ST14, the candidate selecting unit 7 determines whether or not a flag has been set for each of all sectors specified by the radio network control station RNC or some sectors pre-selected by the mobile station. When no data is being transmitted to the mobile station via the dedicated physical data channel from any sector, the candidate selecting unit 7, in step ST15, selects two or more sector numbers which are IDs specifying two or more sectors which the mobile station will request transmission of data via dedicated physical data channels thereof. These two or more sectors can be either a part of all sectors listed in the sector selection candidate table notified to the mobile station by the radio network control station RNC, or all the sectors.

When, in above-mentioned step ST14, determining that the mobile station is receiving data, via dedicated physical data channels, from two or more sectors, the candidate selecting unit 7, in step ST16, selects, as a candidate, a sector ID specifying a sector whose received power of the common pilot channel is the strongest one of those measured in step ST11.

The modulating unit 8 maps the sector ID of the sector selected by the candidate selecting unit 7 into a predetermined location in each slot according to a transmission frame format specified by the radio network control station RNC, modulates data to be transmitted, and transmits the modulated data to each of the selected sectors.

As mentioned above, according to this embodiment 1, the mobile station determines whether or not it is receiving data, via a dedicated physical data channel, from each of a plurality of sectors, and, when the mobile station is not receiving any data, via the dedicated physical data channel, from each of the plurality of sectors, specifies two or more sector numbers specifying two or more sectors which the mobile station will request transmission of data via dedicated physical data channels thereof. Therefore, the present embodiment offers an advantage of being able to enable other sectors to immediately transmit data, via dedicated physical data channels, to the mobile station, thereby reducing the amount of data to be transmitted which remain to be transmitted from the network to the mobile station and hence improving the probability of data reception of the mobile station via dedicated physical data channels.

### Embodiment 2.

The mobile station according to embodiment 2 of the present invention has the same structure as that according to embodiment 1 shown in Fig. 1 which is the block diagram of the mobile station according to embodiment 1.

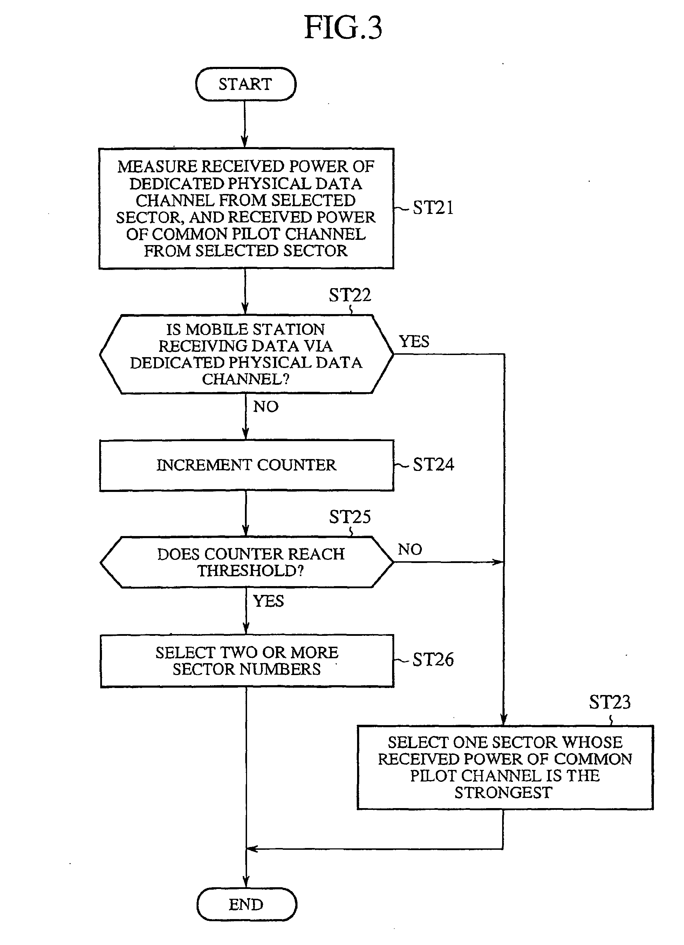

Next, the operation of the mobile station in accordance 2 with embodiment of the present invention will be explained. Fig. 3 is a flow chart showing a flow of processing carried out by the mobile station according to embodiment 2 of the present invention. In step ST21, the mobile station receives data via a dedicated physical data channel from each sector which the mobile station has selected from among sectors listed in a sector selection candidate table notified thereto by a radio network control station RNC, and which has an sector ID which the mobile station has already notified, and a received-power measuring unit 5 measures the received power of the dedicated physical data channel from each sector based on the amplitude of the data transmitted to the mobile station via the dedicated physical data channel from each sector and demodulated by a demodulating unit 4 and setting data of an AGC unit 3 and measures the received power of a common pilot channel from each sector based on the amplitude of data transmitted to the mobile station via the common pilot channel from each sector and demodulated by the demodulating unit 4 and the setting data of the AGC unit 3.

In step ST22, the determining unit 6 compares the received power of the dedicated physical data channel from a sector measured by the received-power measuring unit 5 with a predetermined threshold, and, when the received power is equal to or larger than the predetermined threshold, determines that the mobile station is receiving data via the dedicated physical data channel from the sector, whereas when the received power is smaller than the predetermined threshold, the determining unit 6 determines that the mobile station is not receiving any data via the dedicated physical data channel from the sector. The determining unit 6 thus determines whether or not the mobile station is receiving data via the dedicated physical data channel from each sector.

When determining that the mobile station is receiving data via a dedicated physical data channel from two or more sectors, a candidate selecting unit 7, in step ST23, selects, as a candidate, a sector whose received power of the common pilot channel is the strongest one of those measured in step ST21.

When, in above-mentioned step ST22, determining that the mobile station is not receiving any data via the dedicated physical data channel from each sector, the determining unit 6, in step ST24, increments a counter disposed therein. The determining unit 6 then, in step ST25, determines whether the counter reaches a predetermined threshold. When the determining unit 6 determines that the counter reaches the predetermined threshold, the candidate selecting unit 7, in step ST26, selects two or more sector numbers specifying two or more sectors which the mobile station will request transmission of data via dedicated physical data channels thereof.

When the determining unit 6, in above-mentioned step ST25, determines that the counter has not reached the predetermined threshold yet, the candidate selecting unit 7 processes above-mentioned step ST23.

As mentioned above, according to this embodiment 2, the mobile station determines whether or not it is receiving data via the dedicated physical data channel from each of a plurality of selected sectors, and, when the mobile station is not receiving any data via the dedicated physical data channel from each of the plurality of selected sectors, specifies two or more sector numbers specifying two or more sectors which the mobile station will request transmission of data via dedicated physical data channels thereof. Therefore, the present embodiment offers an advantage of being able to enable other sectors to immediately transmit data, via dedicated physical data channels, to the mobile station even when the mobile station is not receiving any data via the dedicated physical data channel from a selected sector, thereby reducing the amount of data to be transmitted that remain to be transmitted from the network to the mobile station and hence improving the probability of data reception of the mobile station via dedicated physical data channels.

### Embodiment 3.

A mobile station according to embodiment 3 of the present invention has the same structure as that according to embodiment 1 shown in Fig. 1 which is the block diagram of the mobile station according to embodiment 1. In accordance with this embodiment 3, a received-power measuring unit 5 measures the received power of a common pilot channel from each sector based on the amplitude of data transmitted to the mobile station via the common pilot channel from each sector and setting data of an AGC unit 3, and a determining unit 6 compares the received power of the common pilot channel from each sector measured by the received-power measuring unit 5 with a predetermined threshold so as to determine whether or not the mobile station is receiving data via the common pilot channel from each sector.

When transmitting data to the mobile station using the dedicated physical data channel, each sector controls its transmission power in order to reduce the influence of fading in its area upon the transmission of the data. When the transmission power of a sector is small, the mobile station cannot determine whether or not it is receiving transmission of data via the dedicated physical data channel from the sector. The mobile station according to this embodiment 3 is so constructed as to address this problem and to determine whether or not it is receiving data via the common pilot channel from each sector via which each sector can always transmit data to the mobile station with certain transmission power.

Next, the operation of the mobile station in accordance with embodiment 3 of the present invention will be explained.

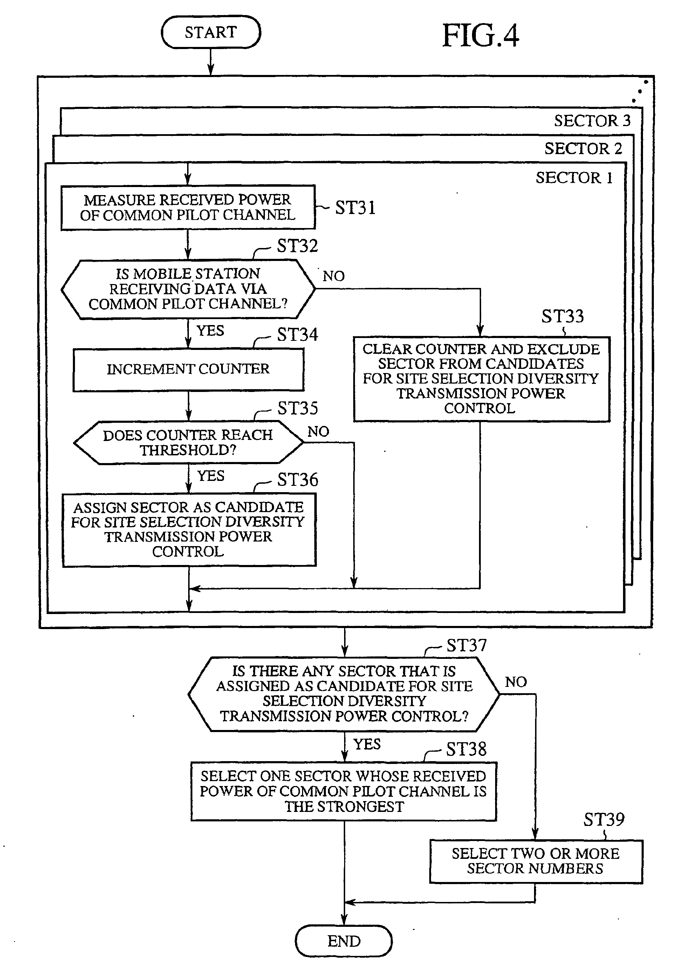

Fig. 4 is a flow chart showing a flow of processing carried out by the mobile station according to embodiment 3 of the present invention. In step ST31, the mobile station receives data via the common pilot channel from each of some sectors or all sectors listed in a sector selection candidate table notified thereto by a radio network control station RNC, and a received-power measuring unit 5 measures the received power of the common pilot channel from each sector based on the amplitude of the data transmitted to the mobile station via the common pilot channel from each sector and demodulated by a demodulating unit 4 and setting data of an AGC unit 3.

In step ST32, the determining unit 6 compares the received power of the common pilot channel from one sector measured by the received-power measuring unit 5 with a predetermined threshold so as to determine whether or not the mobile station is receiving data via the common pilot channel from the sector. When determining that the received power of the common pilot channel from the sector is smaller than the predetermined threshold and hence the mobile station is not receiving any data via the common pilot channel from the sector, the determining unit 6, in step ST33, clears a corresponding counter disposed therein for the sector and then excludes the sector from candidates for site selection diversity transmit power control.

In contrast, when, in step ST32, determining that the received power of the common pilot channel from the sector is equal to or larger than the predetermined threshold and hence the mobile station is receiving data via the common pilot channel from the sector, the determining unit 6, in step ST34, increments the corresponding counter disposed therein for the sector. The determining unit 6 then, in step ST35, compares the value of the counter with a predetermined threshold, and, when the value of the counter is equal to or larger than the predetermined threshold, the determining unit 6, in step ST36, assigns the sector as a candidate for site selection diversity transmit power control. In contrast, when the value of the counter is smaller than the predetermined threshold, the determining unit 6 does nothing.

The above-mentioned processes of steps ST31 to ST36 are performed for each of some sectors or all sectors listed in the sector selection candidate table, and the candidate selecting unit 7, in step ST37, determines whether any sector which has been selected as candidates for site selection diversity transmit power control exists. When determining that two or more sectors which are candidates for site selection diversity transmit power control exist, the candidate selecting unit 7, in step ST38, selects a sector whose received power of the common pilot channel is the strongest from the one or more sectors.

When, in above-mentioned step ST37, determining that no sector has been selected as candidates for site selection diversity transmit power control, the candidate selecting unit 7, in step ST39, selects two or more sector ID numbers specifying two or more sectors which the mobile station will request transmission of data via dedicated physical data channels thereof.

As mentioned above, according to this embodiment 3, the mobile station can select two or more sector numbers specifying two or more sectors which the mobile station will request transmission of data via dedicated physical data channels thereof when determining that no sector which can secure a predetermined amount of received power of the common pilot channel exists. Therefore, the present embodiment offers an advantage of being able to reduce the amount of data to be transmitted which remain to be transmitted from the network to the mobile station, and to improve the probability of data reception of the mobile station via dedicated physical data channels.

In addition, the mobile station according to this embodiment 3 selects sectors which are candidates for site selection diversity transmit power control based on the received power of the common pilot channel from each sector which has the same power when transmitted from each sector. Therefore, the present embodiment offers another advantage of being able to reduce the number of times that data is re-transmitted to the mobile station via the dedicated physical data channel from each sector even in an environment where site selection diversity transmit power control does not run effectively, thereby preventing disconnection of the dedicated physical data channel from each sector.

### Embodiment 4.

A mobile station according to embodiment 4 of the present invention has the same structure as that according to embodiment 1 shown in Fig. 1 which is the block diagram of the mobile station according to embodiment 1. In accordance with this embodiment 4, a received-power measuring unit 5 measures the received power of a common pilot channel from each sector based on the amplitude of data transmitted to the mobile station via the common pilot channel from each sector and setting data of an AGC unit 3, and a determining unit 6 compares the received power of the common pilot channel from each sector measured by the received-power measuring unit 5 with a predetermined threshold so as to determine whether or not the mobile station is receiving data via the common pilot channel from each sector. The determining unit 6 also performs protection determination in order to exclude sectors from each of which the mobile station has been receiving data whose signal level has varied greatly a predetermined number of times with a low amount of received power, from sectors which can be selected as candidates for site selection diversity transmit power control.

The mobile station according to this embodiment 4 is so constructed as to determine whether or not it is receiving data via the common pilot channel from each sector via which each sector can always transmit data with certain transmission power, like that according to this embodiment 3.

Next, the operation of the mobile station in accordance with embodiment 4 of the present invention will be explained.

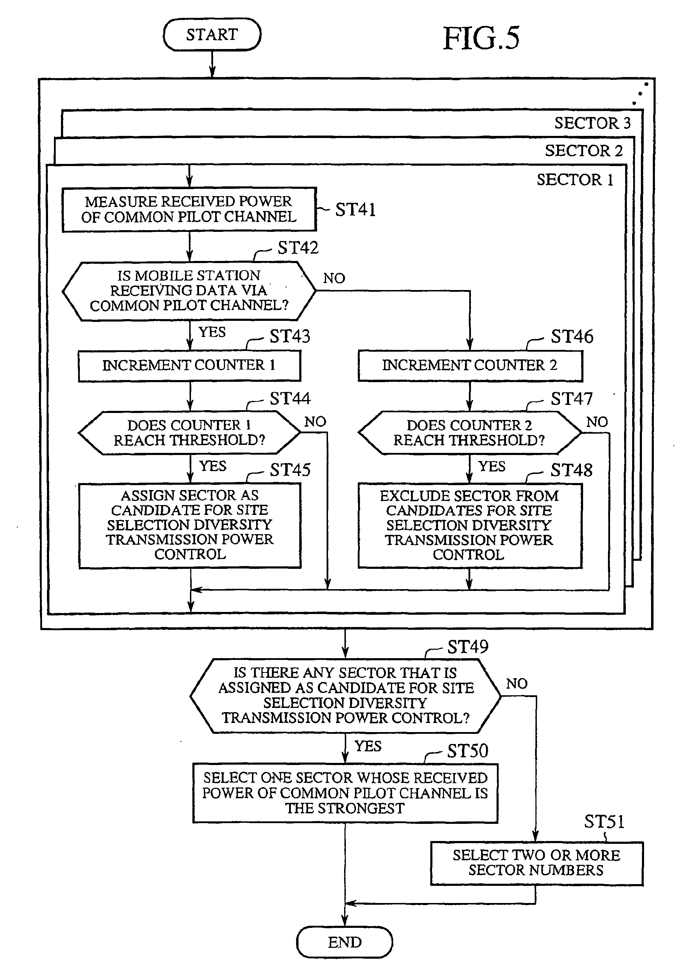

Fig. 5 is a flow chart showing a flow of processing carried out by the mobile station according to embodiment 4 of the present invention. In step ST41, the mobile station receives data via the common pilot channel from each of some sectors or all sectors listed in a sector selection candidate table notified thereto by a radio network control station RNC, and a received-power measuring unit 5 measures the received power of the common pilot channel from each sector based on the amplitude of the data transmitted to the mobile station via the common pilot channel from each sector and demodulated by a demodulating unit 4 and setting data of an AGC unit 3.

In step ST42, the determining unit 6 compares the received power of the common pilot channel from each sector measured by the received-power measuring unit 5 with a predetermined threshold so as to determine whether or not the mobile station is receiving data via the common pilot channel from each sector. When determining that the received power of the common pilot channel from one sector is equal to or larger than a predetermined threshold and hence the mobile station is receiving data via the common pilot channel from the sector, the determining unit 6, in step ST43, increments a corresponding counter 1 disposed therein for the sector.

The determining unit 6 then, in step ST44, compares the value of the incremented counter 1 with a predetermined threshold, and, when the value of the counter 1 is equal to or larger than the predetermined threshold, the determining unit 6, in step ST45, assigns the sector as a candidate for site selection diversity transmit power control. In contrast, when, in step ST44, determining that the value of the counter 1 is smaller than the predetermined threshold, the determining unit 6 does nothing.

In contrast, when, in step ST42, determining that the received power of the common pilot channel from the sector is smaller than the predetermined threshold and hence the mobile station is not receiving any data via the common pilot channel from the sector, the determining unit 6, in step ST46, increments a corresponding counter 2 disposed therein for the sector.

The determining unit 6 then, in step ST47, compares the value of the incremented counter 2 with a predetermined threshold, and, when the value of the counter 2 is equal to or larger than the predetermined threshold, the determining unit 6, in step ST48, excludes the sector from sectors which can be selected as candidates for site selection diversity transmit power control. In contrast, when, in step ST47, determining that the value of the counter 2 is smaller than the predetermined threshold, the determining unit 6 does nothing.

The above-mentioned processes of steps ST41 to ST48 are performed for each of some sectors or all sectors listed in the sector selection candidate table, and the candidate selecting unit 7, in step ST49, determines whether any sector which has been selected as candidates for site selection diversity transmit power control exists. When determining that two or more sectors which have been selected as candidates for site selection diversity transmit power control exist, the candidate selecting unit 7, in step ST50, selects a sector whose received power of the common pilot channel is the strongest from the two or more sectors. When, in above-mentioned step ST49, determining that no sector has been selected as candidates for site selection diversity transmit power control, the candidate selecting unit 7, in step ST51, selects two or more sector ID numbers specifying two or more sectors which the mobile station will request transmission of data via dedicated physical data channels thereof.

As mentioned above, according to this embodiment 4, the mobile station can select two or more sector numbers specifying two or more sectors which the mobile station will request transmission of data via dedicated physical data channels thereof when determining that no sector which can secure a predetermined amount of received power for the common pilot channel exists. Therefore, the present embodiment offers an advantage of being able to reduce the amount of data to be transmitted which remain to be transmitted from the network to the mobile station, and to improve the probability of data reception of the mobile station via dedicated physical data channels.

In addition, the mobile station according to this embodiment 4 selects sectors which are candidates for site selection diversity transmit power control based on the received power of the common pilot channel from each sector which has the same power when transmitted from each sector. Therefore, the present embodiment offers another advantage of being able to reduce the number of times that data is re-transmitted to the mobile station via the dedicated physical data channel from each sector even in an environment where site selection diversity transmit power control does not run effectively, thereby preventing disconnection of the dedicated physical data channel from each sector.

Furthermore, according to this embodiment 4, the determining unit of the mobile station performs protection determination in order to exclude sectors from each of which the mobile station has been receiving data whose signal level has varied greatly a predetermined number of times with a low amount of received power, from sectors which can be selected as candidates for site selection diversity transmit power control. The mobile station can select a sector having the strongest received power from sectors from each of which the mobile station has been receiving data with stable received power. Therefore, the present embodiment offers another advantage of being able to reduce the number of times that data is re-transmitted to the mobile station due to undelivery of data which has been sent out to the mobile station, thereby further reducing the amount of data to be transmitted which remain to be transmitted from the network to the mobile station.

### Embodiment 5.

A mobile station according to embodiment 5 of the present invention has the same structure as that according to embodiment 1 shown in Fig. 1 which is the block diagram of the mobile station according to embodiment 1. In accordance with this embodiment 5, a received-power measuring unit 5 measures the received power of a common pilot channel from each sector based on the amplitude of data transmitted to the mobile station via the common pilot channel from each sector and setting data of an AGC unit 3, and a determining unit 6 performs protection determination in order to exclude sectors from each of which the mobile station has been receiving data whose signal level has varied greatly a predetermined number of times with a low amount of received power, from sectors which can be selected as candidates for site selection diversity transmit power control.

Next, the operation of the mobile station in accordance with embodiment 5 of the present invention will be explained.

The mobile station receives data from two or more sectors by using two or more demodulators. Candidates for sectors from which the mobile station should receive data are specified by the network. Usually, the two or more sectors transmit data to the mobile station by using an identical dedicated physical data channel. When site selection diversity transmit power control is active, sectors other than the ones which the mobile station has selected are made to stop transmission of data to the mobile station via the dedicated physical data channel. The mobile station notifies sector numbers which the mobile station has selected to each sector by using an uplink channel. However, there is a possibility that the sector numbers which the mobile station has selected are not transmitted to each sector normally. To solve this problem, the mobile station in accordance with this embodiment 5 determines that sectors which cannot recognize the sector numbers which the mobile station has selected are sectors having a bad uplink status, and excludes such sectors from sectors which can be selected as candidates for site selection diversity transmit power control.

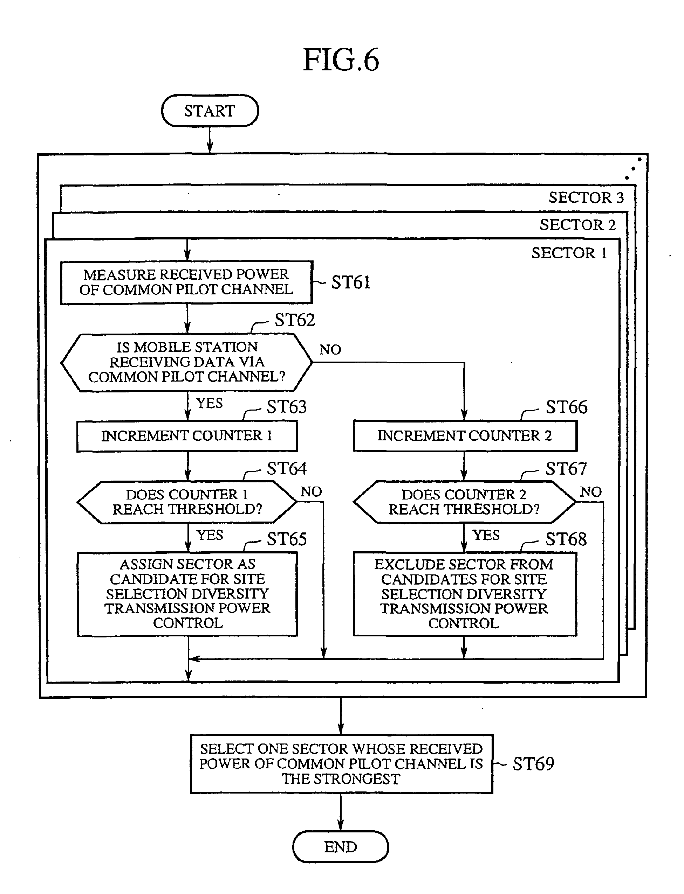

Fig. 6 is a flow chart showing a flow of processing carried out by the mobile station according to embodiment 5 of the present invention. In step ST61, the mobile station receives data via the common pilot channel from each of some sectors or all sectors listed in a sector selection candidate table notified thereto by a radio network control station RNC, and a received-power measuring unit 5 measures the received power of the common pilot channel from each sector based on the amplitude of the data transmitted to the mobile station via the common pilot channel from each sector and demodulated by a demodulating unit 4 and setting data of an AGC unit 3.

In step ST62, the determining unit 6 compares the received power of the common pilot channel from each sector measured by the received-power measuring unit 5 with a predetermined threshold so as to determine whether or not the mobile station is receiving data via the common pilot channel from each sector. When determining that the received power of the common pilot channel from one sector is equal to or larger than the predetermined threshold, the determining unit 6, in step ST63, increments a corresponding counter 1 disposed therein for the sector.

The determining unit 6 then, in step ST64, compares the value of the incremented counter 1 with a predetermined threshold, and, when the value of the counter 1 is equal to or larger than the predetermined threshold, the determining unit 6, in step ST65, assigns the sector as a candidate for site selection diversity transmit power control. In contrast, when, in step ST64, determining that the value of the counter 1 is smaller than the predetermined threshold, the determining unit 6 does nothing.

When, in step ST62, determining that the received. power of the common pilot channel from the sector is smaller than the predetermined threshold, the determining unit 6, in step ST66, increments a corresponding counter 2 disposed therein for the sector.

The determining unit 6 then, in step ST67, compares the value of the incremented counter 2 with a predetermined threshold, and, when the value of the counter 2 is equal to or larger than the predetermined threshold, the determining unit 6, in step ST68, excludes the sector from sectors which can be selected as candidates for site selection diversity transmit power control. In contrast, when, in step ST67, determining that the value of the counter 2 is smaller than the predetermined threshold, the determining unit 6 does nothing.

The above-mentioned processes of steps ST61 to ST68 are performed for each of some sectors or all sectors listed in the sector selection candidate table, and the candidate selecting unit 7, in step ST69, selects a sector whose received power of the common pilot channel is the strongest from the plurality of sectors.

As mentioned above, according to this embodiment 5, the determining unit of the mobile station performs protection determination in order to exclude sectors from each of which the mobile station has been receiving data whose signal level has varied greatly a predetermined number of times with a low amount of received power, from sectors which can be selected as candidates for site selection diversity transmit power control. The mobile station according to this embodiment 5 can thus select a sector having the strongest received power from sectors from each of which the mobile station has been receiving data with stable received power. Therefore, the present embodiment offers an advantage of being able to reduce the number of times that data is re-transmitted to the mobile station due to undelivery of data which has been sent out to the mobile station, thereby further reducing the amount of data to be transmitted which remain to be transmitted from the network to the mobile station.

### Embodiment 6.

A mobile station according to embodiment 6 of the present invention has the same structure as that according to embodiment 1 shown in Fig. 1 which is the block diagram of the mobile station according to embodiment 1. In accordance with this embodiment 5, a determining unit 6 compares the received power of a dedicated physical data channel from each sector measured by a received-power measuring unit 5 with a predetermined threshold so as to determine whether or not the mobile station is receiving data via the dedicated physical data channel from each sector, and then performs protection determination in order to temporarily exclude sectors from each of which the mobile station has been receiving data whose signal level has varied greatly a predetermined number of times with a low amount of received power of the dedicated physical data channel, from sectors which can be selected as candidates for site selection diversity transmit power control.

When sector numbers which the mobile station has selected are not transmitted to sectors normally, the mobile station in accordance with this embodiment 6 determines that sectors which cannot recognize the sector numbers which the mobile station has selected are sectors having a bad uplink status, and excludes such sectors from sectors which can be selected as candidates for site selection diversity transmit power control, like that according to embodiment 5.

Next, the operation of the mobile station in accordance with embodiment 6 of the present invention will be explained.

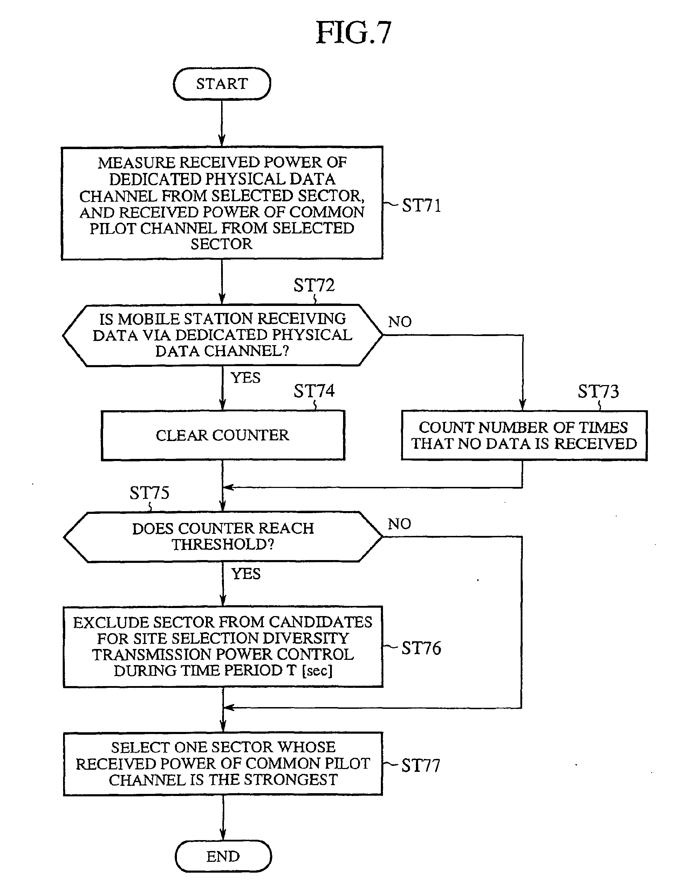

Fig. 7 is a flow chart showing a flow of processing performed by the mobile station according to embodiment 6 of the present invention. In step ST71, the mobile station receives data via the dedicated physical data channel from each of sectors to which the mobile station has already transmitted the sector IDs of the sectors which the mobile station has selected from all sectors listed in a sector selection candidate table notified thereto by a radio network control station RNC, and the received-power measuring unit 5 measures the received power of the dedicated physical data channel from each of the selected sectors based on the amplitude of the data transmitted to the mobile station via the dedicated physical data channel from each sector and demodulated by a demodulating unit 4 and setting data of an AGC unit 3 and measures the received power of a common pilot channel from each sector based on the amplitude of data transmitted to the mobile station via the common pilot channel from each sector and demodulated by the demodulating unit 4 and the setting data of the AGC unit 3.

In step ST72, the determining unit 6 compares the received power of the dedicated physical data channel from a sector measured by the received-power measuring unit 5 with a predetermined threshold, and, when the received power is equal to or larger than the predetermined threshold, determines that the mobile station is receiving data via the dedicated physical data channel from the sector, whereas when the received power is smaller than the predetermined threshold, the determining unit 6 determines that the mobile station is not receiving any data via the dedicated physical data channel from the sector. The determining unit 6 thus determines whether or not the mobile station is receiving data via the dedicated physical data channel from each sector.

When, in step ST72, determining that the mobile station is not receiving any data via the dedicated physical data channel from one sector, the determining unit 6, in step ST73, increments a corresponding counter disposed therein for the sector so as to count the number of times that the mobile station has not received any data via the dedicated physical data channel from the sector. In contrast, when, in step ST72, determining that the mobile station is receiving data via the dedicated physical data channel from the sector, the determining unit 6, in step ST74, clears the corresponding counter disposed therein for the sector.

The determining unit 6 then, in step ST75, determines whether the counter reaches a predetermined threshold which is set beforehand. When determining that the counter reaches the predetermined threshold, the determining unit 6 then, in step ST76, excludes the sector from the selection candidate table which the mobile station has during a predetermined time period T [sec]. In contrast, when the counter does not reach the predetermined threshold yet, the determining unit 6 does nothing.

The candidate selecting unit 7, in step ST77, selects a sector having the strongest received power of the common pilot channel from candidates for sectors to be selected which are notified by the determining unit 6.

As mentioned above, according to this embodiment 6, the mobile station determines whether it is receiving data via the dedicated physical data channel from a sector every time when the mobile station selects the sector, and, when the number of times that it has not received data via the dedicated physical data channel from the sector which the mobile station has selected is equal to or larger than a predetermined value, temporarily excludes the sector from sectors which can be selected as candidates for site selection diversity transmit power control. The mobile station can thus select a sector having the strongest received power from sectors from each of which the mobile station has been receiving data with stable received power. Therefore, the present embodiment offers an advantage of being able to reduce the number of times that data is re-transmitted to the mobile station due to undelivery of data which has been sent out to the mobile station, thereby further reducing the amount of data to be transmitted which remain to be transmitted from the network to the mobile station.

The processing in accordance with this embodiment 6 is carried out independently of the above-mentioned processing in accordance with embodiment 5. As an alternative, the mobile station can carry out the processing in accordance with embodiment 6 after carrying out the processing in accordance with embodiment 5.

### Embodiment 7.

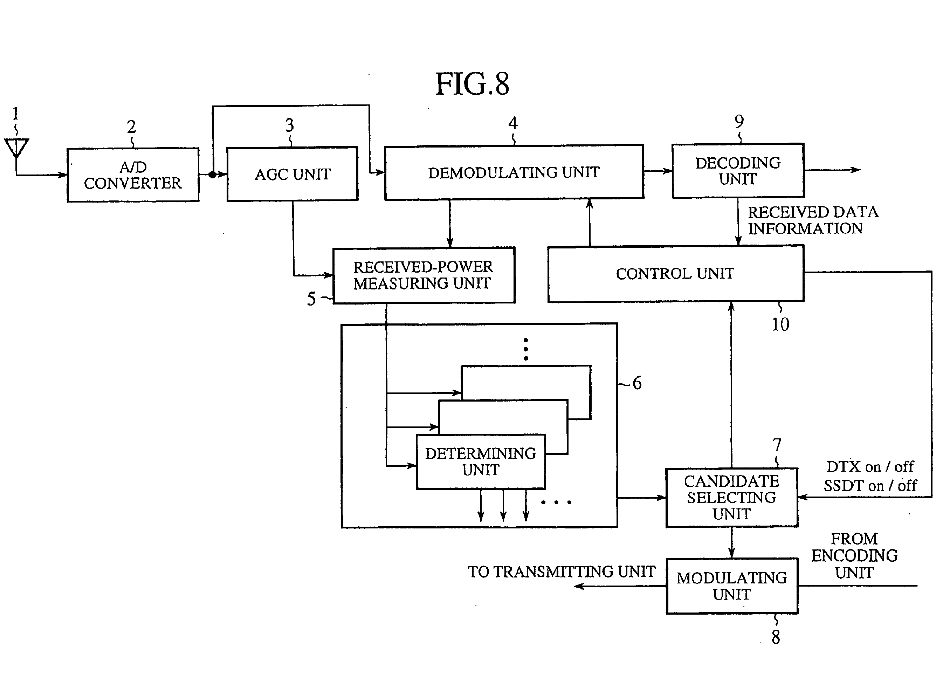

Fig. 8 is a block diagram showing the structure of a mobile station according to embodiment 7 of the present invention. In the figure, reference numeral 9 denotes a decoding unit for decoding received data demodulated by a demodulating unit 4, and for outputting received data information which is a decoded result, and reference numeral 10 denotes a control unit for outputting both site selection diversity transmission power control or SSDT on/off information notified to the mobile station by a radio network control station RNC and DTX (Discontinuous transmission) on/off information about a TFCI (Transport Format Combination Indicator) field indicating the structure of a transport channel in the individual physics control channel to a candidate selecting unit 7 based on the received data information from the decoding unit 9.

The mobile station according to embodiment 7 of the present invention has the same structure as that according to embodiment 1 shown in Fig. 1. A determining unit 6 determines whether or not the mobile station is receiving data via a dedicated physical data channel from each of sectors based on the received power of the dedicated physical data channel, and the candidate selecting unit 7 assigns a sector as a candidate for site selection diversity transmit power control based on whether or not the mobile station is receiving data via the dedicated physical data channel from each of sectors, which is the determination result of the determining unit 6 , and the site selection diversity transmission power control or SSDT on/off information and the DTX on/off information about the TFCI field indicating the structure of the transport channel from the control unit 10.

The TFCI field is an indicator bit transmitted via the individual physics control channel, and, when no data is transmitted via the dedicated physical data channel, the TFCI field is placed in its DTX-on state and is not transmitted.

Next, the operation of the mobile station in accordance with embodiment 7 of the present invention will be explained.

The mobile station receives data from two or more sectors by using two or more demodulators. Candidates for sectors from which the mobile station should receive data are specified by the network. Usually, the two or more sectors transmit data to the mobile station by using an identical dedicated physical data channel. When the site selection diversity transmit power control is active, sectors other than the ones which the mobile station has selected are made to stop transmission of data to the mobile station via the dedicated physical data channel. The mobile station notifies sector numbers which the mobile station has selected to each of the two or more sectors by using an uplink channel. However, there is a possibility that the sector numbers which the mobile station has selected are not transmitted to each sector normally. To solve this problem, in the mobile station in accordance with this embodiment 7, the determining unit 6 determines whether or not the mobile station is receiving data via the dedicated physical data channel from each of the two or more sectors, and informs the candidate selecting unit 7 that it does not reselect a sector which does not transmit any data to the mobile station using the dedicated physical data channel.

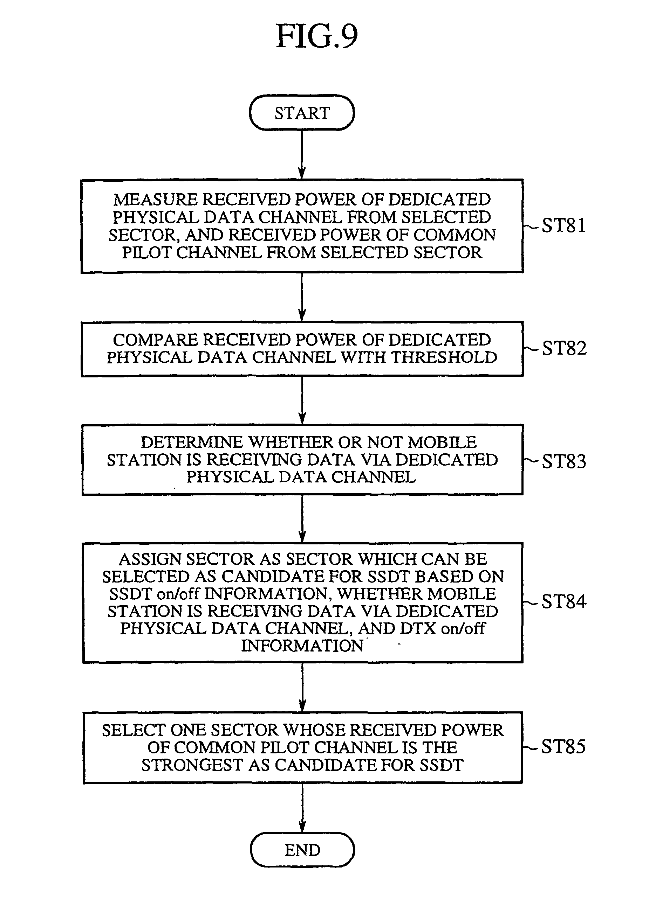

Fig. 9 is a flow chart showing a flow of processing carried out by the mobile station according to embodiment 7 of the present invention. In step S81, the mobile station receives data via the dedicated physical data channel from each of sectors to which the mobile station has already transmitted the sector IDs of the sectors which the mobile station has selected, and a received-power measuring unit 5 measures the received power of the dedicated physical data channel from each of the selected sectors based on the amplitude of the data transmitted to the mobile station via the dedicated physical data channel from each of the selected sectors and demodulated by a demodulating unit 4 and setting data of an AGC unit 3 and also measures the received power of a common pilot channel from each of the selected sectors based on the amplitude of data transmitted to the mobile station via the common pilot channel from and demodulated by the demodulating unit 4 and the setting data of the AGC unit 3.

In step ST82, the determining unit 6 compares the received power of the dedicated physical data channel from a sector measured by the received-power measuring unit 5 with a predetermined threshold, and, when the received power is equal to or larger than the predetermined threshold, determines that the mobile station is receiving data via the dedicated physical data channel from the sector, in step ST83, whereas when the received power is smaller than the predetermined threshold, the determining unit 6 determines that the mobile station is not receiving any data via the dedicated physical data channel from the sector. The determining unit 6 thus determines whether or not the mobile station is receiving data via the dedicated physical data channel from each sector.

The candidate selecting unit 7 then, in step ST84, determines whether to assign each sector as a candidate for site selection diversity transmit power control based on the site selection diversity transmit power control or SSDT on/off information notified thereto from the control unit 10, information indicating whether or not the mobile station is receiving data via the dedicated physical data channel from each sector, which is the determination result of the determining unit 6, and the DTX on/off information about the TFCI filed indicating the structure of the transport channel, which is also notified thereto from the control unit 10.

The candidate selecting unit 7 then, in step ST85, selects a sector whose received power of the common pilot channel is the largest one of those measured in step ST81 as a candidate for site selection diversity transmit power control or SSDT from the candidates which are selected in step ST84.

The candidate selecting unit 7 notifies the sector ID of the sector selected in step ST85 to both the modulating unit 8 and the control unit 10. The control unit 10 then notifies the sector ID of the selector selected by the candidate selecting unit 7 to the demodulating unit 4 so that the demodulating unit 4 demodulates data transmitted to the mobile station via the dedicated physical data channel from the specific sector. The modulating unit 8 carries out the same processing as done by that of the mobile station according to embodiment 1.

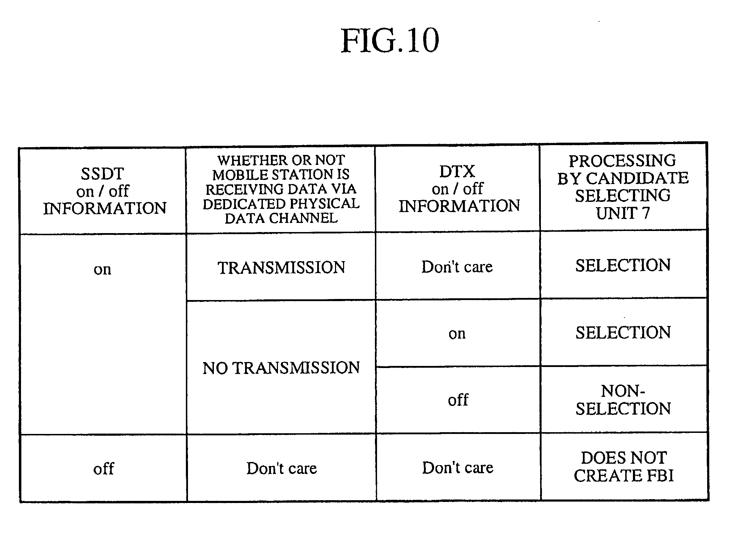

Fig. 10 is a diagram explaining a selection method of selecting a sector which the candidate selecting unit 7 executes in step ST84 of Fig. 9. As shown in Fig. 10, the candidate selecting unit 7 determines whether to assign each sector as a candidate for SSDT based on the SSDT on/off information, information indicating whether or not the mobile station is receiving data via the dedicated physical data channel from each sector, and the DTX on/off information. In a case where SSDT for a sector is in its on state and the mobile station is receiving data via the dedicated physical data channel from the sector, the candidate selecting unit 7 assigns the sector as a candidate for SSDT regardless of the DTX on/off information.

In contrast, when SSDT for a sector is in its on state and the mobile station is not receiving any data via the dedicated physical data channel from the sector, the candidate selecting unit 7 does not exclude the sector from selectors which can be selected as candidates for SSDT if the decoding unit 9 determines that DTX is in its on state, that is, any data is not transmitted via the dedicated physical data channel based on determination of TFCI, whereas the candidate selecting unit 7 excludes the sector from sectors which can be selected as candidates for SSDT if the decoding unit 9 determines that DTX is in its off state, that is, data is transmitted via the dedicated physical data channel based on determination of TFCI. When SSDT for a sector is in its off state, the candidate selecting unit 7 does not create FBI (Feedback Information) which the mobile station will transmit to the sector regardless of the determination result of the determining unit 6 and the DTX on/off information.

As mentioned above, according to this embodiment 7, the candidate selecting unit 7 selects sectors based on the site selection diversity transmit power control or SSDT on/off information, determination of whether or not the mobile station is receiving data via the dedicated physical data channel based on the received power of the dedicated physical data channel, and the DTX on/off information about the TFCI filed indicating the structure of the transport channel. Therefore, this embodiment offers an advantage of being able to select effective sectors each of which can be a candidate for site selection diversity transmit power control or SSDT with a high degree of accuracy, thereby reducing the amount of data to be transmitted which remain to be transmitted from the network to the mobile station.

When a sector which a prior art mobile station has selected is not transmitting any data via its dedicated physical data channel, the prior art mobile station must wait for transmission of data from the sector until the channel reception status is restored to its original one. In contrast, the mobile station according to this embodiment 7 can improve the probability of data reception via dedicated physical data channels.

### Embodiment 8.

A mobile station according to embodiment 8 of the present invention has the same structure as that according to embodiment 7 shown in Fig. 8 which is the block diagram of the mobile station according to embodiment 7. In accordance with this embodiment 8, a received-power measuring unit 5 measures the received power of the TFCI field of a dedicated physical control channel from a selected sector and also measures the received power of a common pilot channel from each sector, and a determining unit 6 determines whether or not the mobile station is receiving data via the dedicated physical data channel from the selected sector based on the received power of the TFCI field of the dedicated physical control channel.
As explained in embodiment 7, since when no data is transmitted via the dedicated physical data channel from the selected sector, the TFCI field is placed in its DTX-on state and is not transmitted, the determining unit can determine whether or not the mobile station is receiving data via the dedicated physical data channel from the selected sector by measuring the received power of the TFCI field of the dedicated physical control channel.

Next, the operation of the mobile station in accordance with embodiment of the present invention will be explained.

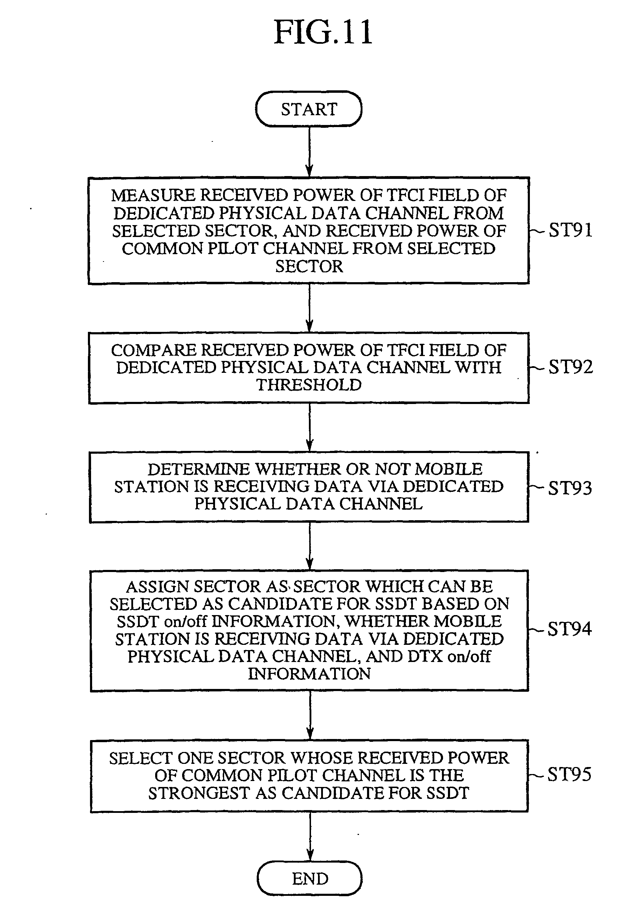

Fig. 11 is a flow chart showing a flow of processing carried out by the mobile station according to embodiment 8 of the present invention. In step S91, the mobile station receives data via the dedicated physical data channel from each of sectors having sector IDs which the mobile station has already selected and notified, and the received-power measuring unit 5 measures the received power of the TFCI field of the dedicated physical data channel from each sector based on an integral of the amplitude of data in the TFCI filed of the dedicated physical data channel and demodulated by the demodulating unit 4 and setting data of an AGC unit 3 and also measures the received power of the common pilot channel from each sector based on the amplitude of data transmitted via the common pilot channel from each sector and demodulated by the demodulating unit 4 and the setting data of the AGC unit 3.

In step ST92, the determining unit 6 compares the received power of the TFCI field of the dedicated physical data channel from a sector measured by the received-power measuring unit 5 with a predetermined threshold, and, when the received power of the TFCI field is equal to or larger than the predetermined threshold, determines that the mobile station is receiving data via the dedicated physical data channel from the sector, whereas when the received power of the TFCI field is smaller than the predetermined threshold, the determining unit 6 determines that the mobile station is not receiving any data via the dedicated physical data channel from the sector, in step ST93. The determining unit 6 thus determines whether or not the mobile station is receiving data via the dedicated physical data channel from each sector.

The processes of steps ST94 and ST95 are the same as those of steps ST84 and ST85 of the Fig. 9 of the embodiment 7, and the selection method of selecting a sector which the candidate selecting unit 7 uses is the same as that of embodiment 7 shown in Fig. 10.

As mentioned above, according to this embodiment 8, the candidate selecting unit 7 selects sectors based on the site selection diversity transmit power control or SSDT on/off information, determination of whether or not the mobile station is receiving data via the dedicated physical data channel based on the received power of the TFCI field of the dedicated physical data channel, and the DTX on/off information about the TFCI filed indicating the structure of the transport channel. Therefore, this embodiment offers an advantage of being able to select effective sectors each of which can be a candidate for site selection diversity transmit power control or SSDT with a high degree of accuracy, thereby reducing the amount of data to be transmitted which remain to be transmitted from the network to the mobile station.

When a sector which a prior art mobile station has selected is not transmitting any data via its dedicated physical data channel, the prior art mobile station must wait for transmission of data from the sector until the channel reception status is restored to its original one. In contrast, the mobile station according to this embodiment 8 can improve the probability of data reception via dedicated physical data channels.

### Embodiment 9.

A mobile station according to embodiment 9 of the present invention has the same structure as that according to embodiment 7 shown in Fig. 8 which is the block diagram of the mobile station according to embodiment 7. In accordance with this embodiment 9, a received-power measuring unit 5 measures the received power of the pilot field of a dedicated physical control channel from a selected sector and also measures the received power of a common pilot channel from each sector, and a determining unit 6 determines whether or not the mobile station is receiving data via the dedicated physical data channel from the selected sector based on the received power of the pilot field of the dedicated physical control channel.

A pilot field (i.e., a pilot symbol) used for synchronous detection is contained in the dedicated physical control channel from each sector. In accordance with this embodiment 9, no pilot field is transmitted to the mobile station when no data is transmitted to the mobile station via the dedicated physical data channel from each sector. Therefore, the mobile station in accordance with this embodiment 9 can determine whether it is receiving data via the dedicated physical data channel from each sector by measuring the received power of the pilot field of the dedicated physical data channel.

Next, the operation of the mobile station in accordance with embodiment 9 of the present invention will be explained.

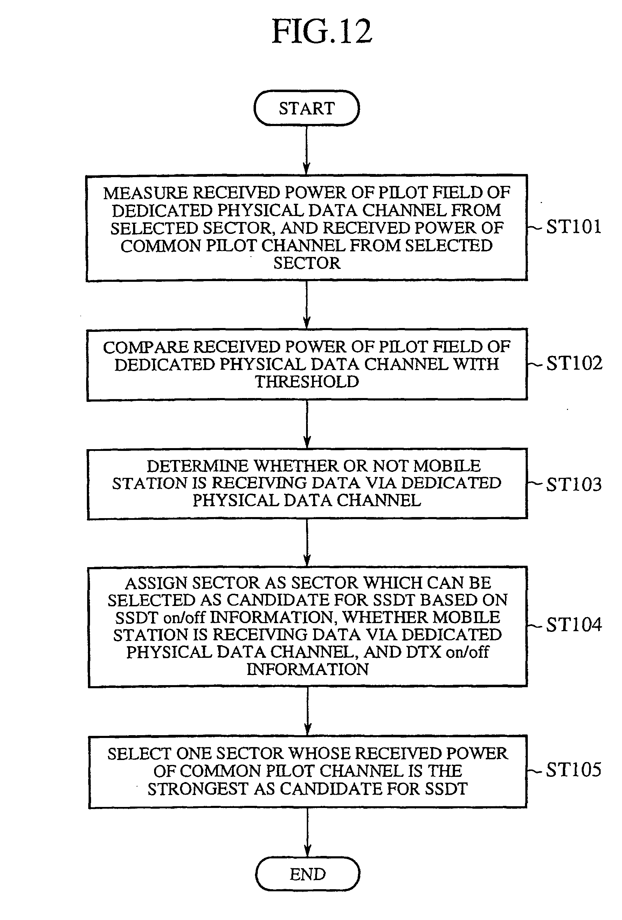

Fig. 12 is a flow chart showing a flow of processing carried out by the mobile station according to embodiment 9 of the present invention. In step S101, the mobile station receives data via the dedicated physical data channel from each of sectors having sector IDs which the mobile station has already selected and notified, and the received-power measuring unit 5 measures the received power of the pilot field of the dedicated physical data channel from each sector based on an integral of the amplitude of data in the pilot filed of the dedicated physical data channel and demodulated by the demodulating unit 4 and setting data of an AGC unit 3 and also measures the received power of the common pilot channel from each sector based on the amplitude of data transmitted via the common pilot channel from each sector and demodulated by the demodulating unit 4 and the setting data of the AGC unit 3.

In step ST102, the determining unit 6 compares the received power of the pilot field of the dedicated physical data channel from a sector measured by the received-power measuring unit 5 with a predetermined threshold, and, when the received power of the pilot field is equal to or larger than the predetermined threshold, determines that the mobile station is receiving data via the dedicated physical data channel from the sector, whereas when the received power of the pilot field is smaller than the predetermined threshold, the determining unit 6 determines that the mobile station is not receiving any data via the dedicated physical data channel from the sector, in step ST103. The determining unit 6 thus determines whether or not the mobile station is receiving data via the dedicated physical data channel from each sector.

The processes of steps ST104 and ST105 are the same as those of steps ST84 and ST85 of the Fig. 9 of the embodiment 7, and the selection method of selecting a sector which the candidate selecting unit 7 uses is the same as that of embodiment 7 shown in Fig. 10.

As mentioned above, according to this embodiment 9, the candidate selecting unit 7 selects sectors based on the site selection diversity transmit power control or SSDT on/off information, determination of whether or not the mobile station is receiving data via the dedicated physical data channel based on the received power of the pilot field of the dedicated physical data channel, and the DTX on/off information about the TFCI filed indicating the structure of the transport channel. Therefore, this embodiment offers an advantage of being able to select effective sectors each of which can be a candidate for site selection diversity transmit power control or SSDT with a high degree of accuracy, thereby reducing the amount of data to be transmitted which remain to be transmitted from the network to the mobile station.

When a sector which a prior art mobile station has selected is not transmitting any data via its dedicated physical data channel, the prior art mobile station must wait for transmission of data from the sector until the channel reception status is restored to its original one. In contrast, the mobile station according to this embodiment 9 can improve the probability of data reception via dedicated physical data channels.

### Embodiment 10.

Amobile station according to embodiment 10 of the present invention has the same structure as that according to embodiment 7 shown in Fig. 8 which is the block diagram of the mobile station according to embodiment 7. In accordance with this embodiment 10, a received-power measuring unit 5 measures the received power of each of the pilot field and TFCI field of a dedicated physical control channel from a selected sector and also measures the received power of a common pilot channel from each sector, and a determining unit 6 determines whether or not the mobile station is receiving data via the dedicated physical data channel from the selected sector based on the difference between the received power of the pilot field of the dedicated physical control channel and the received power of the TFCI field of the dedicated physical control channel.

A pilot field (i.e., a pilot symbol) used for synchronous detection is contained in the dedicated physical control channel from each sector. In accordance with this embodiment 10, the pilot field is transmitted to the mobile station regardless of whether or not data is transmitted to the mobile station via the dedicated physical data channel from each sector, and the TFCI field of the dedicated physical data channel is not transmitted to the mobile station when no data is transmitted to the mobile station via the dedicated physical data channel from each sector. Therefore, the determining unit according to embodiment 10 can determine whether or not the mobile station is receiving data via the dedicated physical data channel from a selected sector by computing the difference between the received power of the pilot field of the dedicated physical control channel from the selected sector and the received power of the TFCI field of the dedicated physical control channel.

Next, the operation of the mobile station in accordance with embodiment 10 of the present invention will be explained.

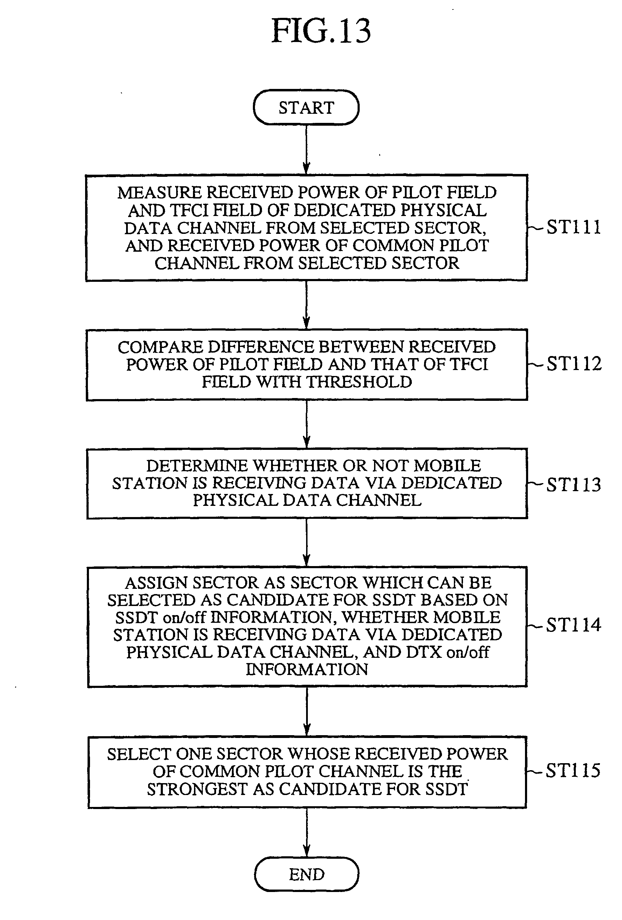

Fig. 13 is a flow chart showing a flow of processing carried out by the mobile station according to embodiment 10 of the present invention. In step S111, the mobile station receives data via the dedicated physical data channel from each of sectors having sector IDs which the mobile station has already selected and notified, and the received-power measuring unit 5 measures the received power of the pilot field of the dedicated physical data channel from each sector based on an integral of the amplitude of data in the pilot filed of the dedicated physical data channel and demodulated by the demodulating unit 4 and setting data of an AGC unit 3 and measures the received power of the TFCI field of the dedicated physical data channel from each sector based on an integral of the amplitude of data in the TFCI filed of the dedicated physical data channel and demodulated by the demodulating unit 4 and the setting data of the AGC unit 3. The received-power measuring unit 5 also measures the received power of the common pilot channel from each sector based on the amplitude of data transmitted via the common pilot channel from each sector and demodulated by the demodulating unit 4 and the setting data of the AGC unit 3.

In step ST112, the determining unit 6 computes the difference between the received power of the pilot field of the dedicated physical control channel from a selected sector and the received power of the TFCI field of the dedicated physical control channel from the sector and then compares the difference between the received power of the pilot field and the received power of the TFCI field with a predetermined threshold, and, when the difference between the received power of the pilot field and the received power of the TFCI field is equal to or larger than the predetermined threshold, determines that the mobile station is receiving data via the dedicated physical data channel from the sector, whereas when the difference between the received power of the pilot field and the received power of the TFCI field is smaller than the predetermined threshold, the determining unit 6 determines that the mobile station is not receiving any data via the dedicated physical data channel from the sector, in step ST113. The determining unit 6 thus determines whether or not the mobile station is receiving data via the dedicated physical data channel from each sector.

The processes of steps ST114 and ST115 are the same as those of steps ST84 and ST85 of the Fig. 9 of the embodiment 7, and the selection method of selecting a sector which the candidate selecting unit 7 uses is the same as that of embodiment 7 shown in Fig. 10.

In accordance with this embodiment 10, the determining unit 6 determines whether or not the mobile station is receiving data via the dedicated physical data channel from each sector based on the difference between the received power of the pilot field of the dedicated physical data channel and the received power of the TFCI field of the dedicated physical data channel, as previously mentioned. As an alternative, the determining unit 6 determines whether or not the mobile station is receiving data via the dedicated physical data channel from each sector based on the ratio of the received power of the pilot field of the dedicated physical data channel to the received power of the TFCI field of the dedicated physical data channel.

In accordance with this embodiment 10, the received-power measuring unit 5 measures the received power of the pilot field of the dedicated physical data channel from each sector based on an integral of the amplitude of data in the pilot filed and the setting data of an AGC unit 3 and measures the received power of the TFCI field of the dedicated physical data channel from each sector based on an integral of the amplitude of data in the TFCI filed and the setting data of the AGC unit 3, as previously mentioned. As an alternative, the received-power measuring unit 5 can measure a relative difference between an integral of the amplitude of data in the pilot filed and an integral of the amplitude of data in the TFCI filed, without using the setting data of the AGC unit 3.

As mentioned above, according to this embodiment 9, the candidate selecting unit 7 selects sectors based on the site selection diversity transmit power control or SSDT on/off information, determination of whether or not the mobile station is receiving data via the dedicated physical data channel based on both the received power of the pilot field of the dedicated physical data channel and the received power of the TFCI field of the dedicated physical data channel, and the DTX on/off information about the TFCI filed indicating the structure of the transport channel. Therefore, this embodiment offers an advantage of being able to select effective sectors each of which can be a candidate for site selection diversity transmit power control or SSDT with a high degree of accuracy, thereby reducing the amount of data to be transmitted which remain to be transmitted from the network to the mobile station.

When a sector which a prior art mobile station has selected is not transmitting any data via its dedicated physical data channel, the prior art mobile station must wait for transmission of data from the sector until the channel reception status is restored to its original one. In contrast, the mobile station according to this embodiment 10 can improve the probability of data reception via dedicated physical data channels.

The determination method in accordance with Embodiment 7 can be combined with any one of the determination methods in accordance with embodiments 8 to 10 where appropriate.

For example, when the mobile station determines that it is receiving data via the dedicated physical data channel form a selected sector using the determination method in accordance with embodiment 7 and also determines that it is not receiving any data via the dedicated physical data channel form the selected sector using the determination method in accordance with either one of embodiments 8 to 10, the mobile station can finally determine that it is receiving data via the dedicated physical data channel form the selected sector. As an alternative, when the mobile station determines that it is receiving data via the dedicated physical data channel form a selected sector using the determination method in accordance with embodiment 7 and also determines that it is receiving data via the dedicated physical data channel form the selected sector using the determination method in accordance with either one of embodiments 8 to 10, the mobile station can finally determine that it is receiving data via the dedicated physical data channel form the selected sector.

### Industrial Applicability

As mentioned above, the mobile station according to the present invention is suitable for reducing the amount of data to be transmitted which remain to be transmitted from a network to the mobile station, and for improving the probability of data reception of the mobile station.

## Claims

1. A mobile station that receives data from a plurality of sectors and selects sectors as candidates for site selection diversity transmit power control from said plurality of sectors, **characterized in that** said mobile station selects two or more sectors from sectors listed in a sector selection candidate table which is received, via said plurality of sectors, from a radio network control station.

2. The mobile station according to Claim 1, **characterized in that** when said mobile station does not receive any data via dedicated physical data channels from selected sectors, said mobile station selects two or more sectors.

3. The mobile station according to Claim 1, **characterized in that** when said mobile station has not received any data via dedicated physical data channels from selected sectors a predetermined number or more of times, said mobile station selects two or more sectors.

4. The mobile station according to Claim 1, **characterized in that** said mobile station determines whether or not said mobile station is receiving data via a common pilot channel from each of said plurality of sectors, and, when said mobile station has not received any data via common pilot channels from each of said plurality of sectors a predetermined number or more of times, said mobile station selects two or more sectors.

5. The mobile station according to Claim 4, **characterized in that** said mobile station excludes sectors from which said mobile station does not receive any data via common pilot channels from candidates for site selection diversity transmit power control.

6. The mobile station according to Claim 4, **characterized in that** said mobile station excludes sectors from which said mobile station has not received any data via common pilot channels the predetermined number or more of times from candidates for site selection diversity transmit power control.

7. A mobile station that receives data from a plurality of sectors and selects sectors as candidates for site selection diversity transmit power control, **characterized in that** said mobile station determines whether or not said mobile station is receiving data from each of said plurality of sectors, and excludes sectors from which said mobile station has not received any data via common pilot channels a predetermined number or more of times from candidates for site selection diversity transmit power control.

8. The mobile station according to Claim 7, **characterized in that** said mobile station determines whether or not said mobile station is receiving data via a common pilot channel from each of said plurality of sectors.

9. The mobile station according to Claim 7, **characterized in that** said mobile station determines whether or not said mobile station is receiving data via a dedicated physical data channel from each of selected sectors, and excludes sectors from which said mobile station has not received any data via dedicated physical data channels a predetermined number or more of times from candidates for site selection diversity transmit power control.

10. A mobile station that receives data from a plurality of sectors and selects sectors as candidates for site selection diversity transmit power control, **characterized in that** said mobile station selects sectors based on site selection diversity transmission power control on/off information received via said plurality of sectors from a radio network control station, information indicating whether or not said mobile station is receiving data via a dedicated physical data channel from each of said plurality of sectors, and DTX (Discontinuous transmission) on/off information of a TFCI (Transport Format Combination Indicator) field indicating a structure of a transport channel in the dedicated physical control channel.

11. The mobile station according to Claim 10, **characterized in that** said mobile station measures received power of the dedicated physical data channel so as to determine whether or not said mobile station is receiving data via the dedicated physical data channel from each of said plurality of sectors.

12. The mobile station according to Claim 10, **characterized in that** said mobile station measures received power of the TFCI field of the dedicated physical data channel so as to determine whether or not said mobile station is receiving data via the dedicated physical data channel from each of said plurality of sectors.

13. The mobile station according to Claim 10, **characterized in that** said mobile station measures received power of a pilot field of the dedicated physical data channel so as to determine whether or not said mobile station is receiving data via the dedicated physical data channel from each of said plurality of sectors.

14. The mobile station according to Claim 10, **characterized in that** said mobile station measures both received power of the TFCI field of the dedicated physical data channel and received power of a pilot field of the dedicated physical data channel so as to determine whether or not said mobile station is receiving data via the dedicated physical data channel from each of said plurality of sectors.
